# EUROPEAN PATENT APPLICATION

(11) **EP 2 469 935 A1**
(43) Date of publication of application: **27.06.2012**
(21) Application number: 10306508.2
(22) Date of filing: 23.12.2010
(51) Int. Cl.: H04W 48/18

(54) **Support of IP flow mobility in a multi-access communication system**

(71) Applicant: Alcatel Lucent, 75007 Paris (FR)
(72) Inventor: El Mghazli, Yacine, 91620, NOZAY (FR); Mongazon-Cazavet, Bruno, 91620, NOZAY (FR)
(74) Representative: El Manouni, Josiane

(57) **Abstract**

In an embodiment, there is provided a method for the support of IP flow mobility in a multi-access communication system, said method comprising:
- a multi-mode terminal selecting an access for the routing of an upstream IP flow, regardless of the access selected for the routing of an associated downstream IP flow.

## Description

The present invention generally relates to communication systems, such as in particular mobile communication systems.

Detailed descriptions of mobile communication systems can be found in the litterature, such as in particular in Technical Specifications published by standardisation bodies such as for example 3GPP (3^{rd} Generation Partnership Project).

Such systems have recently been enhanced to introduce new functionalities or communication services such as IP Flow Mobility (also called IFOM) specified in particular by 3GPP or by IETF (Internet Engineering Task Force), enabling, in a multi-access system, movement of selected IP flows from one access to another access.

There is a need to improve the support of such functionalities. For example, there is a need to optimize and/or simplify multi-mode terminals supporting such functionalities. More generally there is a need to improve the support of communication services in such systems.

Embodiments of the present invention in particular address such needs.

These and other objects are achieved, in one aspect, by a method for the support of IP flow mobility in a multi-access communication system, said method comprising, in an embodiment:
- a multi-mode terminal selecting an access for the routing of an upstream IP flow, regardless of the access selected for the routing of an associated downstream IP flow.

These and other objects are achieved, in other aspects, by entities, such as in particular multi-mode terminal, for performing such method.

These and other objects are achieved, in other aspects, by a communication system comprising such entities.

Some embodiments of apparatus and/or methods in accordance with embodiments of the present invention are now described, by way of example only, and with reference to the accompanying drawings, in which:
- figure 1 illustrates, in an example of multi-access communication system supporting IP flow mobility, an example of an initial step for IP flow routing,
- figure 2 illustrates, in an example of multi-access communication system such as illustrated in figure 1, an example of a next step for IP flow routing, according to a possible solution having some drawbacks that embodiments of the present invention enable to avoid,
- figure 3 illustrates, in an example of multi-access communication system such as illustrated in figure 1, an example of a next step for IP flow routing, according to an embodiment of the present invention.

A multi-mode terminal (e.g. a terminal able to connect to different wireless networks) is able to transfer its current session from one network to another (a.k.a. seamless mobility). So far, there are two mobility solutions families.

The first solution leverages on DSMIPv6 (Dual Stack Mobile IPv6) and is host-based: it means that there is an explicit signalling between the terminal and the network: the terminal sends a MIP message (a "binding update") to inform the network when it moves (all or only part of its flows). The other solution is based on network mechanisms and the terminal is only doing a normal network entry without any specific mobility signalling with the network. GTP and PMIP are techniques that fall into this category.

When several wireless networks are available simultaneously in its radio environment (typically WiFi and cellular), not only the user can transfer all its current sessions from one network to another (a.k.a. seamless mobility), but it is also important to move only certain sessions to the WiFi, while keeping the others on the cellular network (and vice versa). This function is called "IP flow mobility" (IFOM) in 3GPP R10 networks and it assumes the mobility solution allows such service-granularity transfer. Today, both host-based (MIP) and network-based mobility solutions (GTP, PMIP) offer extensions to allow this function.

An example of multi-access system supporting IP flow mobility is illustrated in the figures. By way of example, the system comprises two accesses: a cellular access and a WiFi access, and a multi-mode terminal therefore comprises two interfaces: a cellular interface interfacing with the cellular access and a WiFi interface interfacing with the WiFi access. In the illustrated example, the IP flows are tunnelled through the EPC (Evolved Packet Core) between a LMA (Local Mobility Anchor) and a S-GW (Serving Gateway) associated with the cellular access or an ePDG (evolved Packet Data Gateway) associated with the WiFi access.

By way of example, two IP flows are illustrated: IP Flow 1 between the terminal and an Application Server A, and IP Flow 2 between the terminal and an Application Server B. These IP flows are bidirectional, comprising an Upstream IP Flow (from terminal to Application Server) and an associated Downstream IP Flow (from Application Server to terminal).

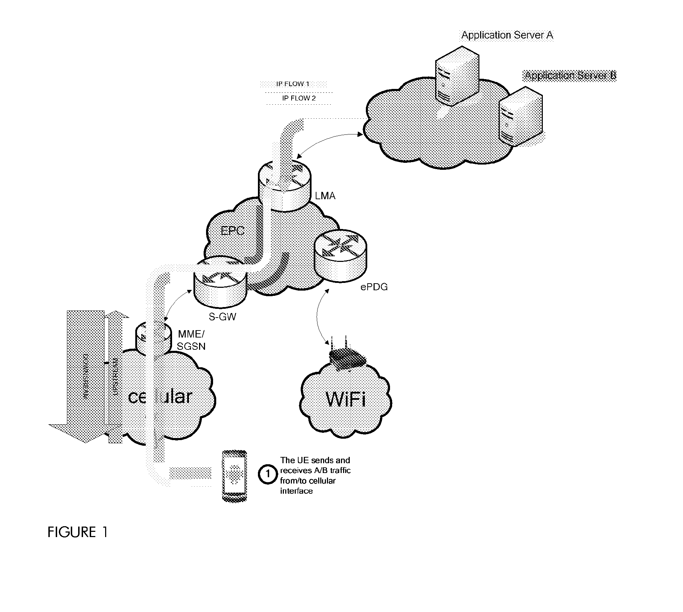

Figure 1 shows an initial step, where by way of example the multimode terminal is sending and receiving data traffic using the cellular interface, for all running sessions from/to servers A and B. In particular, as illustrated in figure 1, Upstream IP Flow 2 (from terminal to Application Server B) and Downstream IP Flow 2 (from Application Server B to terminal) are both routed via cellular access.

For any reason (according to network-based IP flow mobility decision), the LMA then decides that, for example, the application flow B must be carried by the WiFi access. Therefore, in a next step, all the downstream traffic is routed down to the ePDG at the LMA level.

As recognized by the inventors, one problem to solve is, in particular in the network-based mobility case where there is no explicit signalling between the terminal and the network, how the terminal is informed about which flows it should send through the Wifi and which flows it should keep on the cellular.

Several solutions could be used to solve such problem:
1) Packet Reflector (IETF):
   When the terminal receives a packet from a given application on a given interface, it will always sends the packets to this application using this interface. This option is described in IETF document "draft-ietf-netext-logical-interface-support":
      "The Logical interface must transmit uplink packets on the same physical interface on which the downlink packet was received for the particular prefix/flow. This will guarantee that packets belonging to the same session (e.g. TCP connection) are routed along the same path (downlink and uplink). In other words a flow mobility decision taken at the LMA will be understood at the MN as an implicit decision when packets belonging to the same flow will arrive at a new interface."

This implies that the terminal keeps track locally of the incoming data traffic in order to determine the right outgoing interface among the different networks available.

Another limitation of this approach is when the terminal initiates a communication for a given application, it needs to send out a packet without having received any packet for this application.
2) Explicit dedicated signalling between terminal and networks:
   The solution here consists in informing the terminal using some sort of explicit signalling with the network to dynamically inform the host of the interface it must use. The problem with this approach is straightforward: it is very unlikely to add some signalling between the terminal and the network, which breaks the network-based approach.

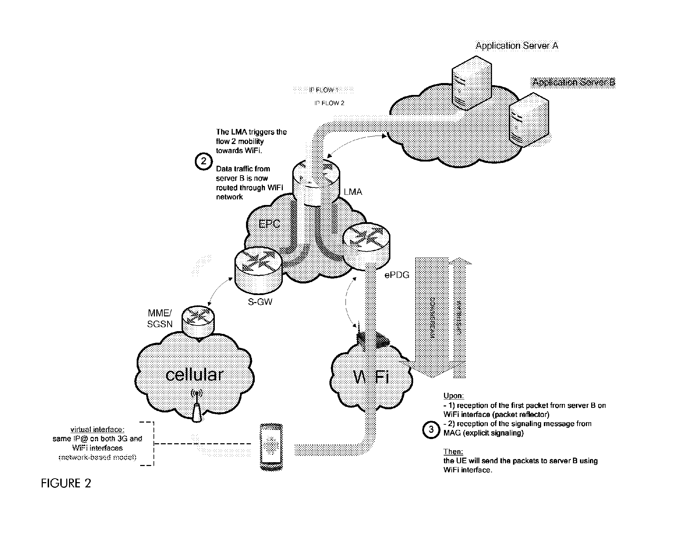

Figure 2 illustrates, in the considered example, a next step according to the above-mentioned solutions 1) and 2). As illustrated in figure 2, Upstream IP Flow 2 (from terminal to Application Server B) and Downstream IP Flow 2 (from Application Server B to terminal) are both routed via WiFi access.

In other words, as recognized by the inventors, both solutions 1) and 2) are symmetric: here it means that the terminal must be able to differentiate IP flows based on the 5-tuple in order to choose the outgoing interface. This leads to consumption of precious CPU cycles on the terminal.

In an embodiment, an alternative approach is proposed that, on the contrary, enables to keep the terminal as simple as possible: whatever the way the network side is routing the downstream traffic, the terminal remains unchanged and keeps sending the upstream packets through the interface currently selected (e.g. the cellular network). Doing so, the IP flow mobility is asymmetric.

The interface currently selected may be selected for example according to a local routing table (such as based on the destination address). In another example, it may be selected according to operator's policies (for example as provided by Access Network Discovery and Selection Function ANDSF) and/or according to user preferences (for example as configured in the terminal).

Since most of the user traffic is downstream traffic, we keep having a significant gain when offloading traffic to e.g. WiFi, while simplifying the terminal and taking maximal benefit from the network-based approach.

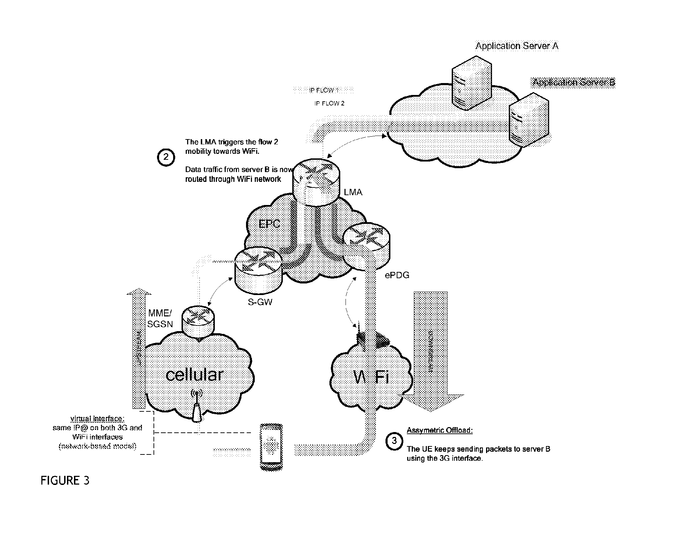

Figure 3 illustrates, in the considered example, a next step according to an embodiment of the present invention. As illustrated in figure 3, Upstream IP Flow 2 (from terminal to Application Server B) is routed via cellular access and Downstream IP Flow 2 (from Application Server B to terminal) is routed via WiFi access. In other words, here the terminal still sends the upstream data traffic (destination = server B) using the cellular interface. This is transparent for the network.

In an embodiment, there is provided a method for the support of IP flow mobility in a multi-access communication system, said method comprising:
- a multi-mode terminal selecting an access for the routing of an upstream IP flow, regardless of the access selected for the routing of an associated downstream IP flow.

In an embodiment, said method comprises:
- the network selecting an access for the routing of a downstream IP flow, based on networkdecision.

In an embodiment, said method comprises:
- the terminal selecting an access for the routing of an upstream IP flow, based on terminal decision.

In an embodiment, said method comprises:
- the terminal selecting an access for the routing of an upstream IP flow, at the start of said upstream IP flow.

In an embodiment, said method comprises:
- the terminal selecting an access for the routing of an upstream IP flow, based on a local routing table.

In an embodiment, said method comprises:
- the terminal selecting an access for the routing of an upstream IP flow, based on operator's policies and/or user preferences.

In an embodiment, said method comprises, in a multi-access system comprising cellular access and WiFi access:
- the terminal selecting one of the cellular access and the WiFi access for the routing of an upstream IP flow, regardless of the selection of the cellular or the WiFi access for the routing of an associated downstream IP flow.

In addition to a method for the support of network-based IP flow mobility in a multi-access system (examples of which have been described above), the present invention also provides entities, such as in particular multi-mode terminal, comprising means for performing such a method. The present invention also provides a multi-access communication system comprising such entities.

The detailed implementation of the above-mentioned means does not raise any special problem for a person skilled in the art, and therefore such means do not need to be more fully disclosed than has been made above, by their function, for a person skilled in the art.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for the support of IP flow mobility in a multi-access communication system, said method comprising:
- a multi-mode terminal selecting an access for the routing of an upstream IP flow, regardless of the access selected for the routing of an associated downstream IP flow.

2. A method according to claim 1, comprising:
- the network selecting an access for the routing of a downstream IP flow, based on network decision.

3. A method according to claim 1 or 2, comprising:
- the terminal selecting an access for the routing of an upstream IP flow, based on terminal decision.

4. A method according to any of claims 1 to 3, comprising:
- the terminal selecting an access for the routing of an upstream IP flow, at the start of said upstream IP flow.

5. A method according to any of claims 1 to 4, comprising:
- the terminal selecting an access for the routing of an upstream IP flow, based on a local routing table.

6. A method according to any of claims 1 to 5, comprising:
- the terminal selecting an access for the routing of an upstream IP flow, based on operator's policies and/or user preferences.

7. A method according to any of claims 1 to 6, comprising, in a multi-access system comprising cellular access and WiFi access:
- the terminal selecting one of the cellular access and the WiFi access for the routing of an upstream IP flow, regardless of the selection of the cellular or the WiFi access for the routing of an associated downstream IP flow.

8. A multi-mode terminal, comprising, for the support of IP flow mobility in a multi-access communication system:
- means for selecting an access for the routing of an upstream IP flow, regardless of the access selected for the routing af an associated downstream IP flow.

9. A terminal according to claim 8, comprising:
- means for receiving a downstream IP flow via an access selected by the network for the routing of said downstream IP flow based on network decision.

10. A terminal according to claim 8 or 9, comprising:
- means for selecting an access for the routing of an upstream IP flow, based on terminal decision.

11. A terminal according to any of claims 8 to 10, comprising:
- means for selecting an access for the routing of an upstream IP flow, at the start of said upstream IP flow.

12. A terminal according to any of claims 8 to 11, comprising:
- means for selecting an access for the routing of an upstream IP flow, based on a local routing table.

13. A terminal according to any of claims 8 to 12, comprising:
- means for selecting an access for the routing of an upstream IP flow, based on operator's policies and/or user preferences.

14. A terminal according to any of claims 8 to 13, comprising, in a multi-access system comprising cellular access and WiFi access:
- means for selecting one of the cellular access and the WiFi access for the routing of an upstream IP flow, regardless of the selection of the cellular or the WiFi access for the routing of an associated downstream IP flow.

15. A multi-access communication system supporting network-based IP flow mobility, comprising at least one multi-mode terminal according to any of claims 8 to 14.
